# EUROPÄISCHE PATENTSCHRIFT

(11) **EP 2 758 270 B1**
(45) Veröffentlichungstag und Bekanntmachung des Hinweises auf die Patenterteilung: **07.03.2018**
(21) Anmeldenummer: 12745409.8
(22) Anmeldetag: 04.08.2012
(51) Int. Cl.: B60L 15/20, B60T 17/22, B60W 10/08, B60W 30/02, B60W 30/18, B60L 7/26

(54) **VERFAHREN ZUM VERRINGERN EINER MECHANISCHEN BELASTUNG MINDESTENS EINER KOMPONENTE DES ANTRIEBSSTRANGS EINES KRAFTFAHRZEUGS SOWIE ENTSPRECHENDES KRAFTFAHRZEUG**
METHOD FOR REDUCING A MECHANICAL LOAD ON AT LEAST ONE COMPONENT OF THE DRIVE TRAIN OF A MOTOR VEHICLE, AND CORRESPONDING MOTOR VEHICLE
PROCÉDÉ POUR RÉDUIRE UNE CONTRAINTE MÉCANIQUE EXERCÉE SUR AU MOINS UN COMPOSANT D'UNE CHAÎNE CINÉMATIQUE D'UN VÉHICULE AUTOMOBILE ET VÉHICULE AUTOMOBILE CORRESPONDANT

(30) Priorität: 23.09.2011 DE 102011114303
(43) Veröffentlichungstag der Anmeldung: 30.07.2014
(73) Patentinhaber: Audi AG, 85045 Ingolstadt (DE)
(72) Erfinder: ROSENBERGER, Martin, 85049 Ingolstadt (DE)
(86) Internationale Anmeldenummer: PCT/EP2012/003344
(87) Internationale Veröffentlichungsnummer: WO 2013/041167

(56) Entgegenhaltungen:
- DE-A1- 10 145 891
- DE-A1-102005 033 354
- DE-A1-102009 000 044
- FR-A1- 2 854 357
- US-A- 5 994 859
- US-A1- 2003 062 859
- US-A1- 2005 182 532
- US-A1- 2009 305 832
- US-A1- 2010 087 996

## Beschreibung

Die vorliegende Erfindung betrifft ein Verfahren zum Verringern einer mechanischen Belastung mindestens einer Komponente des Antriebsstrangs eines Kraftfahrzeugs, das mindestens zwei Räder aufweist, wovon mindestens eines ein Antriebsrad ist, wobei das Kraftfahrzeug ein Antiblockierbremssystem sowie mindestens eine elektrische Maschine umfasst, die zum Antreiben genau eines Antriebsrads des Kraftfahrzeugs mit diesem Antriebsrad gekoppelt ist, wobei zumindest zwei Rädern des Kraftfahrzeugs jeweils eine Reibungsbremse zugeordnet ist. Sie betrifft weiterhin ein Kraftfahrzeug mit mindestens zwei Rädern, wovon mindestens eines ein Antriebsrad ist, umfassend eine erste Reibungsbremse, die dem ersten Rad zugeordnet ist, und eine zweite Reibungsbremse, die dem zweiten Rad zugeordnet ist, sowie ein Antiblockierbremssystem, das derart ausgebildet ist, dass es radindividuell auf die Reibungsbremsen der Räder des Kraftfahrzeugs wirkt.

Bei Antiblockierbremssystemen (ABS) werden als Aktor üblicherweise konventionelle Reibungsbremsen benutzt. Dabei kann das ABS zusätzlich zu den Bremsmomentanforderungen für die Reibungsbremse auch eine Drehmomentanforderung für das Antriebsaggregat, beispielsweise den Verbrennungsmotor generieren. Diese Schnittstelle zum Antriebsaggregat wird häufig mit dem Begriff Motorschleppmomentenregelung (MSR) bezeichnet. Die MSR dient dazu, das Schleppmoment des Antriebsaggregats, welches wie ein zusätzliches Bremsmoment auf das Fahrzeug wirkt, gezielt zu verringern. In manchen Fällen kann durch das ABS während eines Bremsvorgangs sogar ein antreibendes Drehmoment vom Antriebsaggregat gefordert werden, um beispielsweise den Bremsschlupf der Reifen schnell zu verringern. Die MSR kann sich dabei naturgemäß nur auf die mit dem Antriebsaggregat verbundenen Achsen, d.h. die angetriebenen Achsen, auswirken. Zudem kann die MSR nur eine gleichzeitige Beeinflussung aller mit dem Antriebsaggregat verbundenen Räder erreichen. Die Effektivität der MSR hängt stark von der Dynamik und der Stellgenauigkeit des Antriebsaggregats ab. Bei Verbrennungsmotoren ist sowohl die Dynamik als auch die Stellgenauigkeit durch die Eigenschaften der thermodynamischen Prozesse jedoch stark eingeschränkt.

Bei Fahrzeugen mit elektrischem Antrieb an einer oder mehreren Achsen besitzt das ABS üblicherweise einen ähnlichen oder identischen Aufbau wie bei konventionell, d.h. verbrennungsmotorisch, angetriebenen Fahrzeugen. Bei elektrischen Antriebsmaschinen steht der MSR ein Aktor zur Verfügung, der bezüglich Dynamik und Stellgenauigkeit dem Verbrennungsmotor deutlich überlegen ist.

In diesem Zusammenhang ist die DE 10 2005 033 354 A1 zu erwähnen, die sich allerdings ausschließlich auf Fahrzeuge mit einer Antriebstopologie erstreckt, bei der eine elektrische Maschine auf zwei Räder wirkt. Dies setzt ein Differential zwischen den beiden Antriebsrädern voraus. Das in dieser Druckschrift vorgeschlagene Regelverfahren baut auf dem Mittelwert beider Raddrehzahlen auf. Diese Druckschrift betrifft insbesondere die Dämpfung der Schwingungen in jenem Teil des Antriebsstrangs, der sich zwischen dem Differential und der einen elektrischen Maschine befindet.

Aus der DE 102 23 990 B4 ist ein Verfahren bekannt, das die Aufteilung des gesamten Bremsmoments auf eine regenerative Bremse und eine Reibungsbremse betrifft. Dabei wird insbesondere ein Verfahren beschrieben, das sich mit dem Sonderfall einer bevorstehenden bzw. aktiven ABS-Regelung befasst, die ausschließlich mit der Reibungsbremse durchgeführt werden soll. Zu diesem Sonderfall werden Methoden erläutert, wie eine bevorstehende ABS-Regelung detektiert und in welcher Form das Drehmoment der regenerativen Bremse zurückgefahren werden kann, wobei gleichzeitig das Drehmoment der Reibungsbremse entsprechend erhöht wird, so dass keine ungewollte Änderung der Fahrzeugverzögerung auftritt.

Ferner betrifft die DE 10 2005 033 354 A1 ein Verfahren zur Abdämpfung von Schwingungen im Antriebsstrang eines Elektrofahrzeugs

Bei aus dem Stand der Technik bekannten Kraftfahrzeugen, bei denen eine elektrische Maschine zum Antreiben genau eines Antriebsrads vorgesehen ist und entsprechend mit diesem Antriebsrad gekoppelt ist, wurden deutlich mehr Schädigungen im Antriebsstrang festgestellt als bei Kraftfahrzeugen, die einen herkömmlichen Verbrennungsmotor verwenden. Die von den Schädigungen betroffenen Komponenten werden deshalb stärker dimensioniert, was in einer ungewünschten Kostenerhöhung resultiert.

Die Aufgabe der vorliegenden Erfindung besteht deshalb darin, ein eingangs genanntes Verfahren bzw. ein eingangs genanntes Kraftfahrzeug derart weiterzubilden, dass eine Reduzierung der Gefahr von Schädigungen von Komponenten des Antriebsstrangs ermöglicht wird.

Diese Aufgabe wird gelöst durch ein Verfahren mit den Merkmalen des Patentanspruchs 1 sowie durch ein Kraftfahrzeug mit den Merkmalen des Patentanspruchs 9.

Der vorliegenden Erfindung liegt zunächst die Erkenntnis zugrunde, dass bei elektrischen Antrieben häufig die elektrischen Maschinen radnah angeordnet sind. Daraus resultiert eine im Vergleich zu verbrennungsmotorischen Antrieben deutlich veränderte Topologie des Antriebsstrangs. Insbesondere bei Systemen, bei denen eine elektrische Maschine genau ein Antriebsrad antreibt, entsteht ein sehr hohes Massenträgheitsmoment, bezogen auf die Abtriebswelle, welches direkt am Antriebsrad oder radnah angeordnet ist. Diese Massenträgheitsmomente können bei einer ABS-Regelung oder auch einer Vollbremsung ohne ABS-Regelung zu einer extremen Belastung des mechanischen Antriebsstrangs, insbesondere einer eine elektrische Maschine und ein zugeordnetes Antriebsrad verbindenden Gelenkwelle sowie einer gegebenenfalls zusätzlich vorhandenen Getriebestufe führen. Diese mechanische Belastung kann zu Schädigungen führen, insbesondere zu einem vorzeitigen Verschleiß. Überdies können die erwähnten Massenträgheitsmomente in Verbindung mit einer elastischen Gelenkwelle dazu führen, dass die Gelenkwelle durch die dynamischen ABS-Eingriffe an der Reibungsbremse zu Schwingungen angeregt wird. Diese Schwingungen können ebenfalls zu einem vorzeitigen Verschleiß der Gelenkwellen sowie einer gegebenenfalls zusätzlich vorhandenen Getriebestufe führen.

Erfindungsgemäß ist deshalb vorgesehen, in einem Schritt b1) die mechanische Belastung zumindest einer eine elektrische Maschine und ein zugeordnetes Antriebsrad verbindenden Gelenkwelle zu ermitteln. Anschließend wird in einem Schritt b2) die dem Antriebsrad zugeordnete elektrische Maschine derart angesteuert, dass der mechanischen Belastung entgegengewirkt wird.

Auf diese Weise lassen sich die mechanischen Belastungen der Gelenkwelle sowie einer gegebenenfalls zusätzlich vorhandenen Getriebestufe zuverlässig reduzieren. Dies erlaubt eine geringere Dimensionierung, was in einer Kosteneinsparung resultiert. Überdies ist die Gefahr eines vorzeitigen Verschleißes reduziert.

Es ist gemäß einer Alternative vorgesehen, dass die dem mindestens einen Antriebsrad zugeordnete elektrische Maschine derart angesteuert wird, dass ein ermitteltes Torsionsmoment einer die elektrische Maschine und das zugehörige Antriebsrad verbindenden Gelenkwelle reduziert wird. Dazu können gleichsinnige und gegensinnige Ansteuerungen der elektrischen Maschine nötig sein. Darüber hinaus ist gemäß einer weiteren Alternative vorgesehen, dass die dem mindestens einen Antriebsrad zugeordnete elektrische Maschine derart angesteuert wird, dass eine ermittelte Torsionsschwingungsbewegung einer die elektrische Maschine und das zugeordnete Antriebsrad verbindenden Gelenkwelle reduziert wird. Auch hierbei können gleichsinnige oder gegensinnige Ansteuerungen der der entsprechenden Gelenkwelle zugeordneten elektrischen Maschine nötig sein, um die ermittelten Torsionsschwingungen zu reduzieren, insbesondere zu kompensieren.

Durch die vorliegende Erfindung ergeben sich jedoch weitere signifikante Vorteile. Durch die Elastizität der Gelenkwelle entsteht, wie erwähnt, ein schwingungsfähiges System. Die Eigenfrequenz dieses Systems kann in einem Bereich liegen, der von den Insassen als störend und unkomfortabel wahrgenommen wird. Durch die erfindungsgemäße Vorgehensweise lassen sich derartige Schwingungen reduzieren, insbesondere minimieren, was in einer deutlichen Erhöhung des Komforts für die Insassen des Kraftfahrzeugs resultiert. Überdies hat sich herausgestellt, dass einerseits die Massenträgheitsmomente zu einer geringeren Dynamik des Rads führen, was die ABS-Regelung beeinträchtigen kann. Ebenso können die bereits erwähnten Schwingungen einer elastisch ausgebildeten Gelenkwelle die ABS-Regelung zusätzlich beeinträchtigen. Diese Beeinträchtigungen führen zu einer unerwünschten Verlängerung des Bremswegs. Durch die erfindungsgemäßen Maßnahmen lässt sich demnach der Bremsweg deutlich reduzieren, was in einer Erhöhung der Sicherheit der Insassen des Kraftfahrzeugs resultiert.

Grundsätzlich lässt sich die vorliegende Erfindung auch bei Kraftfahrzeugen mit nur zwei Rädern, wovon eines ein Antriebsrad ist, anwenden, beispielsweise bei Motorrädern. Besonders vorteilhaft einsetzen lässt sich jedoch die vorliegende Erfindung in einem Kraftfahrzeug, insbesondere einem PKW oder einem LKW, das mindestens ein erstes und ein zweites Antriebsrad sowie mindestens eine erste und eine zweite elektrische Maschine umfasst, wobei die erste elektrische Maschine dem ersten Antriebsrad und die zweite elektrische Maschine dem zweiten Antriebsrad zugeordnet ist. Dabei wird in Schritt b1) eine erste mechanische Belastung zumindest einer die erste elektrische Maschine und das erste Antriebsrad zugeordneten Gelenkwelle ermittelt. Weiterhin wird in Schritt b1) eine zweite mechanische Belastung zumindest einer die zweite elektrische Maschine und das zweite Antriebsrad zugeordneten Gelenkwelle ermittelt. Anschließend wird in Schritt b2) die dem ersten Antriebsrad zugeordnete elektrische Maschine derart angesteuert, dass der ersten mechanischen Belastung entgegengewirkt wird, und die dem zweiten Antriebsrad zugeordnete zweite elektrische Maschine derart angesteuert wird, dass der zweiten mechanischen Belastung entgegengewirkt wird. Bei den Antriebsrädern kann es sich beispielsweise um die zwei Vorderräder oder die zwei Hinterräder eines PKW handeln. Selbstverständlich lässt sich die vorliegende Erfindung auch bei Fahrzeugen mit Vierradantrieb vorteilhaft einsetzen.

Bevorzugt wird in Schritt b1) die mechanische Belastung zumindest einer eine elektrische Maschine und ein zugeordnetes Antriebsrad verbindenden Gelenkwelle sensiert oder berechnet. Zum Sensieren können Sensoren Anwendung finden, die ohnehin im Rahmen des Antiblockierbremssystems bereits vorhanden sind. Insbesondere bei einer derartigen Umsetzung wird keine zusätzliche Hardware im Fahrzeug benötigt. Es müssen lediglich geeignete Schnittstellen zwischen dem Antiblockierbremssystem und der Regelungsvorrichtung für die Ansteuerung der mindestens einen elektrischen Maschine vorgesehen werden. Es können jedoch auch zusätzliche Sensoren vorgesehen werden, beispielsweise Dehnungsmessstreifen und dergleichen, die geeignet sind, Verwindungen, Torsionen und/oder Schwingungen zu erfassen. Alternativ können die mechanischen Belastungen in Simulationen ermittelt werden und beispielsweise in Form einer Nachschlagtabelle in einer Regelungsvorrichtung abgelegt sein. Dabei kann der jeweiligen mechanischen Belastung eine entsprechende Ansteuerung der entsprechenden elektrischen Maschine bzw. elektrischen Maschinen zugeordnet sein. Die Tabelle kann beispielsweise werkseitig im Rahmen einer Kalibrierung fahrzeugspezifisch angelegt werden, es kann jedoch auch für alle Typen einer Baureihe eine exemplarisch ermittelte Tabelle in die entsprechenden Regelungsvorrichtungen geladen werden.

Zumindest ein Anteil der mechanischen Belastung kann eine Schwingung der Gelenkwelle betreffen. Durch die Berücksichtigung dieses Anteils lassen sich Schwingungen der Gelenkwelle wirksam reduzieren, insbesondere minimieren. Zumindest ein Anteil der mechanischen Belastung kann das Trägheitsmoment der jeweiligen elektrischen Maschine betreffen. Durch die Berücksichtigung dieses Anteils kann eine größere Dynamik des Rads und damit der ABS-Regelung erzielt werden. Zumindest ein Anteil der mechanischen Belastung kann das Drehmoment der vom Antiblockierbremssystem angesteuerten Reibungsbremse betreffen. Durch die Kompensation dieses Anteils kann ebenfalls eine größere Dynamik beim Bremsvorgang und ein damit ein kürzerer Bremsweg erzielt werden.

Schließlich kann zumindest ein Anteil der mechanischen Belastung die Kontaktkraft zwischen mindestens einem Rad und der Fahrbahn betreffen. Dabei ist eine mechanische Belastung der Gelenkwelle durch die Kontaktkraft zwischen Rad und Fahrbahn vor allem bei stark schwankenden Reibwerten, insbesondere Reibwertssprüngen, sehr hoch. Eine mechanische Belastung durch das Trägheitsmoment der elektrischen Maschine ist vor allem bei niedrigen Reibwerten, beispielsweise auf eisigem Untergrund, und stark schwankenden Reibwerten sehr hoch. Dabei ist das Trägheitsmoment generell selbst nicht abhängig vom Betriebszustand (das Trägheitsmoment ist eine Konstante wie beispielsweise auch die Masse) - lediglich die Belastung durch das Trägheitsmoment ist abhängig vom Betriebszustand. Trägheitsmomente können durch die vorliegende Erfindung zwar auch nicht real verändert werden, allerdings kann ihr Einfluss auf das Systemverhalten regelungstechnisch minimiert, insbesondere sogar kompensiert werden, so dass sich das geregelte System so verhält wie ein System mit geringeren Trägheitsmomenten.

Bevorzugt ist demnach vorgesehen, dass die dem mindestens einen Antriebsrad zugeordnete elektrische Maschine gleichsinnig zu der demselben Antriebsrad zugeordneten Reibungsbremse angesteuert wird, wobei gleichsinnig auf die Richtung des Drehmoments bezogen ist.

Weitere vorteilhafte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für das erfindungsgemäße Kraftfahrzeug.

Im Nachfolgenden werden nunmehr Ausführungsbeispiele der vorliegenden Erfindung unter Bezugnahme auf die beigefügten Zeichnungen näher beschrieben. Es zeigen:
- Fig. 1: in schematischer Darstellung ein Flussdiagramm eines Ausführungs-beispiels eines erfindungsgemäßen Verfahrens;
- Fig. 2: in schematischer Darstellung ein erstes Ausführungsbeispiel eines erfindungsgemäßen Kraftfahrzeugs; und
- Fig. 3: in schematischer Darstellung ein zweites Ausführungsbeispiel eines erfindungsgemäßen Kraftfahrzeugs.

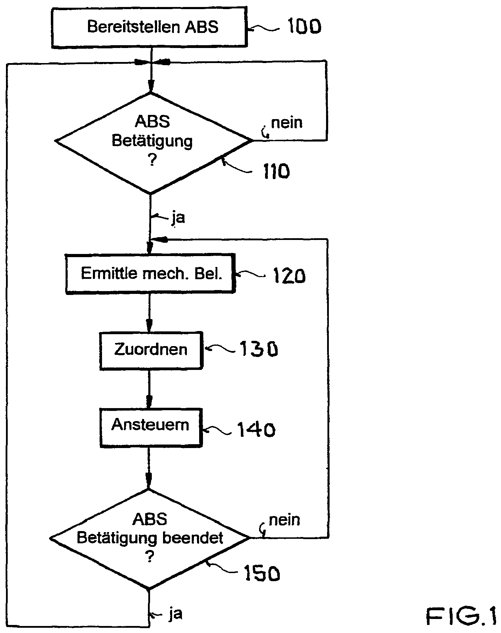

Fig. 1 zeigt in schematischer Darstellung ein Flussdiagramm eines Ausführungsbeispiels eines erfindungsgemäßen Verfahrens. Zunächst wird im Schritt 100 ein Antiblockierbremssystem derart bereitgestellt, dass es radindividuell auf die Reibungsbremsen der Räder des Kraftfahrzeugs wirkt. Anschließend wird im Schritt 110 fortwährend geprüft, ob eine Betätigung des Antiblockierbremssystems vorliegt. Ist dies der Fall, wird anschließend Schritt 120 ausgeführt, bei dem eine mechanische Belastung zumindest einer eine elektrische Maschine und ein zugeordnetes Antriebsrad verbindenden Gelenkwelle ermittelt wird. Anschließend wird im Schritt 130 mindestens eine Ursache der ermittelten mechanischen Belastung dem mindestens einen Antriebsrad zugeordnet. Im Schritt 140 wird daraufhin die dem Antriebsrad zugeordnete elektrische Maschine derart angesteuert, dass der dem Antriebsrad zugeordneten Ursache der mechanischen Belastung entgegengewirkt wird, diese insbesondere minimiert oder sogar kompensiert wird. Im Schritt 150 wird geprüft, ob die ABS-Betätigung beendet ist, falls dies nicht der Fall ist, wird zu Schritt 120 zurückverzweigt. Wurde die ABS-Betätigung beendet, zweigt das Verfahren zurück zu Schritt 110.

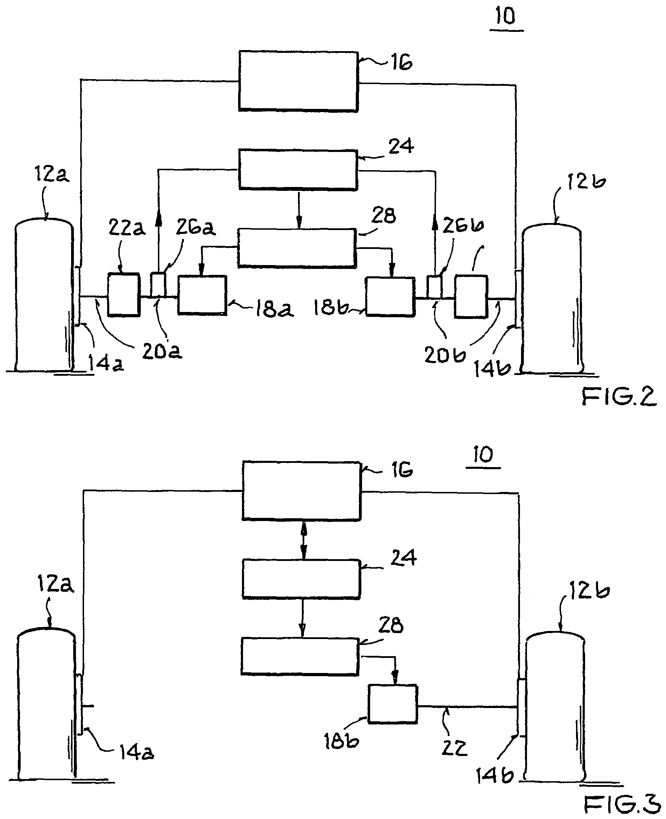

In den Fig. 2 und 3 werden für gleiche und gleichwirkende Elemente dieselben Bezugszeichen verwendet. Diese werden der Übersichtlichkeit halber nur einmal eingeführt.

Fig. 2 zeigt die im Hinblick auf die vorliegende Erfindung wesentlichen Elemente des ersten Ausführungsbeispiels eines erfindungsgemäßen Kraftfahrzeugs 10. Dieses umfasst vorliegend ein erstes Antriebsrad 12a, dem eine erste Reibungsbremse 14a zugeordnet ist, sowie ein zweites Antriebsrad 12b, dem eine zweite Reibungsbremse 14b zugeordnet ist. Ein mit 16 bezeichnetes Antiblockierbremssystem ist mit den beiden Reibungsbremsen 14a, 14b gekoppelt und dazu ausgebildet, auf die Reibungsbremsen 14a, 14b der Antriebsräder 12a, 12b radindividuell einzuwirken.

Dem ersten Antriebsrad 12a ist eine erste elektrische Maschine 18a zugeordnet, die über eine Gelenkwelle 20a mit dem Antriebsrad 12a gekoppelt ist. Eine zweite elektrische Maschine 18b ist über eine Gelenkwelle 20b mit dem Antriebsrad 12b gekoppelt. Die Gelenkwellen 20a, 20b können einteilig ausgeführt sein, sie können jedoch auch zweiteilig ausgeführt sein, wobei zwischen den beiden Teilen ein Getriebe 22a, eine Kupplung oder dergleichen angeordnet sein kann.

Antriebsstrang im Sinne der vorliegenden Erfindung ist demnach der Bereich zwischen einer elektrischen Maschine 18 und dem zugeordneten Antriebsrad 12.

In dem dargestellten Ausführungsbeispiel ist eine Ermittlungsvorrichtung 24 vorgesehen, die mit Sensoren 26a, 26b gekoppelt ist. Die Ermittlungsvorrichtung 24 ist ausgelegt, eine mechanische Belastung der Gelenkwellen 20a, 20b während einer Betätigung des Antiblockierbremssystems 16 zu ermitteln. Die Sensoren 26a, 26b können ausgelegt sein, eine Torsion der Gelenkwellen 20a, 20b bzw. Schwingungen der Gelenkwellen 20a, 20b zu erfassen. Die Sensoren 26a, 26b können insbesondere Dehnungsmessstreifen und/oder Drehzahlsensoren und/oder Drehbeschleunigungssensoren und/oder Drehwinkelsensoren umfassen. Dabei ist eine Zuordnung der Belastung zum jeweiligen Rad 12a, 12b trivial. Das Signal des Sensors 26a wird dem Rad 12a zugeordnet, das Signal des Sensors 26b dem Rad 12b. Die Ermittlungsvorrichtung 24 ist ausgebildet, aus den von den Sensoren 26a, 26b gemessenen Größen die Größen zu berechnen, die eine mit der Ermittlungsvorrichtung 24 gekoppelte Regelungsvorrichtung 28 zur Regelung benötigt. Beispielsweise messen die Sensoren 26a, 26b die Drehgeschwindigkeit. Die Ermittlungsvorrichtung 24 kann dann ausgelegt sein, aus der Drehgeschwindigkeit das Wellendrehmoment oder auch den Verdrehwinkel der zugehörigen Gelenkwelle zu berechnen. Dabei können die benötigten Größen direkt berechnet oder modellbasiert geschätzt werden.

Die mit der Ermittlungsvorrichtung 24 gekoppelte Regelungsvorrichtung 28 ist ausgelegt, mindestens eine Ursache der ermittelten mechanischen Belastung dem jeweiligen Antriebsrad 12a, 12b zuzuordnen. Mit anderen Worten findet die Ermittlungsvorrichtung 24 heraus, ob die mechanische Belastung der Gelenkwellen 20a, 20b vom Trägheitsmoment der jeweiligen elektrischen Maschine 18 herrührt und/oder vom Drehmoment der vom Antiblockierbremssystem 16 angesteuerten Reibungsbremse und/oder von der mechanischen Belastung von der Kontaktkraft zwischen dem jeweiligen Rad 12 und der Fahrbahn und/oder von einer Schwingung der jeweiligen Gelenkwelle.

Die Regelungsvorrichtung 28 ist weiterhin ausgelegt, die dem jeweiligen Antriebsrad 12 zugeordnete elektrische Maschine 18 derart anzusteuern, dass der dem Antriebsrad 12 zugeordneten Ursache der mechanischen Belastung entgegengewirkt wird. Dazu bestimmt die Regelungsvorrichtung 28 aus den Eingangsgrößen die benötigten Stellgrößen der elektrischen Maschinen18a, 18b. Dabei arbeitet die Regelungsvorrichtung 28 radindividuell, d.h. sie steuert jede elektrische Maschine 18a, 18b so an, dass dadurch die mechanische Belastung des dieser elektrischen Maschine 18a, 18b zugeordneten Antriebsstrangs reduziert wird.

Grundsätzlich ist es möglich, dass die Regelung des einen Rads auch Daten des anderen Rads berücksichtigt, um dadurch beispielsweise das Verhalten des Gesamtfahrzeugs zu optimieren.

Die Regelung kann verschiedene Strategien vorsehen, die auch miteinander kombiniert werden können. Dabei kann eine reine Steuerung vorgesehen sein, aber auch eine Regelung.

In einem ersten Ausführungsbeispiel werden die elektrischen Maschinen gleichsinnig zu den Reibungsbremsen angesteuert. Dadurch lassen sich die Auswirkungen der Trägheitsmomente kompensieren und das Wellendrehmoment reduzieren. Dies ist mit einer reinen Steuerung möglich, insbesondere sogar ohne die Verwendung von Sensoren.

In einem anderem Ausführungsbeispiel werden die elektrischen Maschinen so angesteuert, dass sie die Schwingungsbewegung der jeweiligen Gelenkwelle ausregeln. Hierzu ist im Normalfall eine tatsächliche Regelung erforderlich. Im Normalfall werden dafür Sensoren benötigt.

Bei dem in Fig. 3 dargestellten Ausführungsbeispiel wird nur das Antriebsrad 12b von einer elektrischen Maschine 18b angetrieben. An der Gelenkwelle 22 ist kein Sensor vorgesehen. Vielmehr ist die Ermittlungsvorrichtung 24 mit dem Antiblockierbremssystem 16 gekoppelt, wobei die Ermittlungsvorrichtung 24 auf Daten zurückgreift, die von Sensoren des Antiblockierbremssystems 16 bereitgestellt werden. Die vom Antiblockiersystem zur Verfügung gestellten Daten können insbesondere die radindividuellen Bremsdrücke und/oder Bremsmomente der Reibungsbremsen sowie die radindividuellen Drehzahlen der Räder umfassen. Die in Fig. 3 dargestellte Ausführungsform ist insbesondere dann von Vorteil, wenn die elektrische Maschine 18b gleichgerichtet zum Antiblockierbremssystem 16 angesteuert werden soll.

Alternativ kann vorgesehen werden, dass die Ermittlungsvorrichtung 24 auf die Ergebnisse der Sensoren des Antiblockierbremssystems 16 zurückgreift und zu diesem Zwecke mit dem Antiblockierbremssystem 16 verbunden ist.

Es ist möglich, dass die Ermittlungsvorrichtung 14 auf die Sensoren des Antiblöckierbremssystems 16 zurückgreift, d.h. direkt mit den entsprechenden Sensoren verbunden ist, jedoch keine Verbindung zum Antiblockierbremssystem 16 selbst hat.

In einer weiteren Ausführungsform können zusätzliche Sensoren, wie beispielsweise die Sensoren 26a, 26b von Fig. 2 vorgesehen sein, wobei die Ermittlungsvorrichtung 24 nicht mit dem Antiblockierbremssystem 16 verbunden ist. Es ist jedoch auch möglich, dass die zusätzlichen Sensoren 26 vorgesehen sind und die Ermittlungsvorrichtung 24 zusätzlich mit dem Antiblockierbremssystem 16 gekoppelt ist.

Die zusätzlichen Sensoren können weiterhin auch Bestandteil der jeweiligen elektrischen Maschine 18 sein, beispielsweise ein Drehzahlsensor der jeweiligen elektrischen Maschine 18.

## Patentansprüche

1. Verfahren zum Verringern einer mechanischen Belastung mindestens einer Komponente des Antriebsstrangs eines Kraftfahrzeugs (10), das mindestens zwei Räder aufweist, wovon mindestens eines ein Antriebsrad (12a, 12b) ist, wobei das Kraftfahrzeug (10) ein Antiblockierbremssystem (16) sowie mindestens eine elektrische Maschine (18) umfasst, die zum Antreiben genau eines Antriebsrads (12a, 12b) des Kraftfahrzeugs (10) mit diesem Antriebsrad gekoppelt ist, wobei zumindest zwei Rädern des Kraftfahrzeugs (10) jeweils eine Reibungsbremse (14a, 14b) zugeordnet ist, folgende Schritte umfassend:
a) Bereitstellen des Antiblockierbremssystems (16) derart, dass es radindividuell auf die Reibungsbremsen (14a, 14b) der Räder des Kraftfahrzeugs (10) wirkt (Schritt 100);
b) während einer Betätigung des Antiblockierbremssystems (16) (Schritt 110):
b1) Ermitteln der mechanischen Belastung zumindest einer eine elektrische Maschine (18a, 18b) und ein zugeordnetes Antriebsrad (12a, 12b) verbindenden Gelenkwelle (20a, 20b) (Schritt 120); und
b2) Ansteuern der dem Antriebsrad (12a, 12b) zugeordneten elektrischen Maschine (18a, 18b) derart, dass der mechanischen Belastung entgegengewirkt wird (Schritt 140),
b3) wobei die dem mindestens einen Antriebsrad (12a, 12b) zugeordnete elektrische Maschine (18a, 18b) derart angesteuert wird, dass ein ermitteltes Torsionsmoment einer die elektrische Maschine (18a, 18b) und das zugeordnete Antriebsrad (12a, 12b) verbindenden Gelenkwelle (20a, 20b) reduziert wird und/oder eine ermittelte Torsionsschwingungsbewegung der die elektrische Maschine (18a, 18b) und das zugeordnete Antriebsrad (12a, 12b) verbindenden Gelenkwelle (20a, 20b) reduziert wird.

2. Verfahren nach Anspruch 1,
**dadurch gekennzeichnet,**
**dass** das Kraftfahrzeug (10) mindestens ein erstes (12a) und ein zweites (12b) Antriebsrad sowie mindestens eine erste (18a)und eine zweite (18b) elektrische Maschine umfasst, wobei die erste elektrische Maschine (18a) dem ersten Antriebsrad (12a) und die zweite elektrische Maschine (18b) dem zweiten Antriebsrad (12b) zugeordnet ist,
wobei in Schritt b1) eine erste mechanische Belastung zumindest einer die erste elektrische Maschine (18a) und das erste Antriebsrad (12a) zugeordneten Gelenkwelle (20a) ermittelt wird,
wobei in Schritt b1) weiterhin eine zweite mechanische Belastung zumindest einer die zweite elektrische Maschine (18b) und das zweite Antriebsrad (12b) zugeordneten Gelenkwelle (20b) ermittelt wird, wobei in Schritt b2) die dem ersten Antriebsrad (12a) zugeordnete erste elektrische Maschine (18a) derart angesteuert wird, dass der ersten mechanischen Belastung entgegengewirkt wird, und
und wobei in Schritt b2) weiterhin die dem zweiten Antriebsrad (12b) zugeordnete zweite elektrische Maschine (18b) derart angesteuert wird, dass der zweiten mechanischen Belastung entgegengewirkt wird.

3. Verfahren nach einem der Ansprüche 1 oder 2,
**dadurch gekennzeichnet,**
**dass** in Schritt b1) die mechanische Belastung zumindest einer eine elektrische Maschine (18a, 18b) und ein zugeordnetes Antriebsrad (12a, 12b) verbindenden Gelenkwelle (20a, 20b) sensiert oder berechnet wird.

4. Verfahren nach einem der vorhergehenden Ansprüche,
**dadurch gekennzeichnet,**
**dass** zumindest ein Anteil der mechanischen Belastung eine Schwingung der Gelenkwelle (20a, 20b) betrifft.

5. Verfahren nach einem der vorhergehenden Ansprüche,
**dadurch gekennzeichnet,**
**dass** zumindest ein Anteil der mechanischen Belastung das Trägheitsmoment der jeweiligen elektrischen Maschine (18a, 18b) betrifft.

6. Verfahren nach einem der vorhergehenden Ansprüche,
**dadurch gekennzeichnet,**
**dass** zumindest ein Anteil der mechanischen Belastung das Drehmoment der vom Antiblockierbremssystem (16) angesteuerten Reibungsbremse (14a, 14b) betrifft.

7. Verfahren nach einem der vorhergehenden Ansprüche,
**dadurch gekennzeichnet,**
**dass** zumindest ein Anteil der mechanischen Belastung die Kontaktkraft zwischen mindestens einem Rad und der Fahrbahn betrifft.

8. Verfahren nach einem der vorhergehenden Ansprüche,
**dadurch gekennzeichnet,**
**dass** die dem mindestens einen Antriebsrad (12a, 12b) zugeordnete elektrische Maschine (18a, 18b) gleichsinnig zu der demselben Antriebsrad (12a, 12b) zugeordneten Reibungsbremse (14a, 14b) angesteuert wird, wobei gleichsinnig auf die Richtung des Drehmoments bezogen ist.

9. Kraftfahrzeug (10) mit mindestens zwei Rädern, wovon mindestens eines ein Antriebsrad (12a, 12b) ist, umfassend:
- eine erste Reibungsbremse (14a), die dem ersten Rad zugeordnet ist, und eine zweite Reibungsbremse (14b), die dem zweiten Rad zugeordnet ist;
- ein Antiblockierbremssystem (16), das derart ausgebildet ist, dass es radindividuell auf die Reibungsbremsen (14a, 14b) der Räder des Kraftfahrzeugs (10) wirkt;
**dadurch gekennzeichnet,**
**dass** das Kraftfahrzeug (10) weiterhin umfasst:
- mindestens eine elektrische Maschine (18a, 18b), die zum Antreiben genau eines Antriebsrads (12a, 12b) des Kraftfahrzeugs (10) mit diesem Antriebsrad (12a, 12b) gekoppelt ist;
- mindestens eine Ermittlungsvorrichtung (24) zum Ermitteln der mechanischen Belastung zumindest einer eine elektrische Maschine (18) und ein zugeordnetes Antriebsrad (12) verbindenden Gelenkwelle (20) während einer Betätigung des Antiblockierbremssystems (16); und
- eine Regelungsvorrichtung (28), die mit der Ermittlungsvorrichtung (24) gekoppelt ist, wobei die Regelungsvorrichtung (28) ausgelegt ist, die dem Antriebsrad (12) zugeordnete elektrische Maschine (18) derart anzusteuern, dass der mechanischen Belastung entgegengewirkt wird, wobei die Regelungsvorrichtung (28) ferner ausgelegt ist, die dem mindestens einen Antriebsrad (12a, 12b) zugeordnete elektrische Maschine (18a, 18b) derart anzusteuern, dass ein ermitteltes Torsionsmoment einer die elektrische Maschine (18a, 18b) und das zugeordnete Antriebsrad (12a, 12b) verbindenden Gelenkwelle (20a, 20b) reduziert wird und/oder eine ermittelte Torsionsschwingungsbewegung der die elektrische Maschine (18a, 18b) und das zugeordnete Antriebsrad (12a, 12b) verbindenden Gelenkwelle (20a, 20b) reduziert wird.

## Claims

1. Method for reducing a mechanical load of at least one component of the drive train of a motor vehicle (10), which has at least two wheels, whereof at least one is a drive wheel (12a, 12b), wherein the motor vehicle (10) comprises an anti-lock braking system (16) as well as at least one electrical machine (18), which is coupled for driving exactly one drive wheel (12a, 12b) of the motor vehicle (10) with said drive wheel, wherein in each case a friction brake (14a, 14b) is assigned to at least two wheels of the motor vehicle (10), comprising the following steps:
a) Provision of the anti-lock braking system (16) in such a manner that it acts individually for each wheel on the friction brakes (14a, 14b) of the wheels of the motor vehicle (10) (step 100);
b) During an actuation of the anti-lock braking system (16) (step 110):
b1) Determination of the mechanical load at least of one articulated shaft (20a, 20b) connecting an electrical machine (18a, 18b) and an assigned drive wheel (12a, 12b) (step 120); and
b2) Control of the electrical machine (18a, 18b) assigned to the drive wheel (12a, 12b) in such a manner, that the mechanical load is counteracted (step 140),
b3) wherein the electrical machine (18a, 18b) assigned to the at least one drive wheel (12a, 12b) is controlled in such a manner, that a determined torsional moment of a articulated shaft (20a, 20b) connecting the electrical machine (18a, 18b) and the assigned drive wheel (12a, 12b) is reduced and/or a determined torsional oscillatory movement of the articulated shaft (20a, 20b) connecting the electrical machine (18a, 18b) and the assigned drive wheel (12a, 12b) is reduced.

2. Method according to claim 1,
**characterised in**
**that** the motor vehicle (10) comprises at least a first (12a) and a second (12b) drive wheel as well as at least a first (18a) and a second (18b) electrical machine, wherein the first electrical machine (18a) is assigned to the first drive wheel (12a) and the second electrical machine (18b) to the second drive wheel (12b), wherein in step b1) a first mechanical load at least of one articulated shaft (20a) assigned to the first electrical machine (18a) and the first drive wheel (12a) is determined,
wherein in step b1) furthermore a second mechanical load at least of one articulated shaft (20b) assigned to the second electrical machine (18b) and the second drive wheel (12b) is determined, wherein in step b2) the first electrical machine (18a) assigned to the first drive wheel (12a) is controlled in such a manner, that the first mechanical load is counteracted, and wherein in step b2) furthermore the second electrical machine (18b) assigned to the second drive wheel (12b) is controlled in such a manner that the second mechanical load is counteracted.

3. Method according to any one of claims 1 or 2,
**characterised in that**
in step b1) the mechanical load of at least one articulated shaft (20a, 20b) connecting an electrical machine (18a, 18b) and an assigned drive wheel (12a, 12b) is sensed or calculated.

4. Method according to any one of the preceding claims,
**characterised in that**
at least a portion of the mechanical load relates to an oscillation of the articulated shaft (20a, 20b).

5. Method according to any one of the preceding claims,
**characterised in that**
at least a portion of the mechanical load relates to the torque of inertia of the respective electrical machine (18a, 18b).

6. Method according to any one of the preceding claims,
**characterised in that**
at least a portion of the mechanical load relates to the torque of the friction brake (14a, 14b) controlled by the anti-lock braking system (16).

7. Method according to any one of the preceding claims,
**characterised in that**
at least a portion of the mechanical load relates to the contact force between at least one wheel and the road surface.

8. Method according to any one of the preceding claims,
**characterised in that**
the electrical machine (18a, 18b) assigned to the at least one drive wheel (12a, 12b) is controlled in the same direction as the friction brake (14a, 14b) assigned to the same drive wheel (12a, 12b), wherein it is related in the same direction to the direction of the torque.

9. Motor vehicle (10) with at least two wheels, whereof at least one is a drive wheel (12a, 12b), comprising:
- a first friction brake (14a), which is assigned to the first wheel, and a second friction brake (14b), which is assigned to the second wheel;
- an anti-lock braking system (16), which is designed in such a manner that it acts individually for each wheel on the friction brakes (14a, 14b) of the wheels of the motor vehicle (10);
**characterised in that**
the motor vehicle (10) furthermore comprises:
- At least one electrical machine (18a, 18b), which is coupled for driving exactly one drive wheel (12a, 12b) of the motor vehicle (10) with said drive wheel (12a, 12b);
- at least one determination device (24) for determining the mechanical load at least of one articulated shaft (20) connecting an electrical machine (18) and an assigned drive wheel (12) during an actuation of the anti-lock braking system (16); and
- a control device (28), which is coupled with the determination device (24), wherein the control device (28) is designed to control the electrical machine (18) assigned to the drive wheel (12) in such a manner that the mechanical load is counteracted, wherein the control device (28) is also designed to control the electrical machine (18a, 18b) assigned to the at least one drive wheel (12a, 12b) in such a manner, that a determined torsional moment of a articulated shaft (20a, 20b) connecting the electrical machine (18a, 18b) and the assigned drive wheel (12a, 12b) is reduced and/or a determined oscillatory movement of the articulated shaft (20a, 20b) connecting the electrical machine (18a, 18b) and the assigned drive wheel (12a, 12b) is reduced.

## Revendications

1. Procédé de diminution d'une charge mécanique au moins d'un composant de la chaîne cinématique d'un véhicule automobile (10) qui présente au moins deux roues, dont au moins une est une roue menante (12a, 12b), dans lequel le véhicule automobile (10) comporte un système de freinage antiblocage (16) ainsi qu'au moins une machine électrique (18) qui est couplée pour l'entraînement précisément d'une roue menante (12a, 12b) du véhicule automobile (10) avec cette roue menante, dans lequel à au moins deux roues du véhicule automobile (10) est associé respectivement un frein à friction (14a, 14b), comprenant les étapes suivantes :
a) la mise à disposition du système de freinage antiblocage (16) de telle manière qu'il agisse par roue individuelle sur les freins à friction (14a, 14b) des roues du véhicule automobile (10) (étape 100) ;
b) pendant un actionnement du système de freinage antiblocage (16) (étape 110) :
b1) la détermination de la charge mécanique au moins d'un arbre d'articulation (20a, 20b) reliant une machine électrique (18a, 18b) et une roue menante associée (12a, 12b) (étape 120) ; et
b2) la commande de la machine électrique (18a, 18b) associée à la roue menante (12a, 12b) de manière à agir contre la charge mécanique (étape 140),
b3) dans lequel la machine électrique (18a, 18b) associée à l'au moins une roue menante (12a, 12b) est commandée de telle manière qu'un moment de torsion déterminé d'un arbre d'articulation (20a, 20b) reliant la machine électrique (18a, 18b) et la roue menante (12a, 12b) associée soit réduit et/ou un mouvement d'oscillation de torsion déterminé de l'arbre d'articulation (20a, 20b) reliant la machine électrique (18a, 18b) et la roue menante (12a, 12b) associée soit réduit.

2. Procédé selon la revendication 1,
**caractérisé en ce que**
le véhicule automobile (10) comporte au moins une première (12a) et une seconde (12b) roue menante ainsi qu'au moins une première (18a) et une seconde (18b) machine électrique, dans lequel la première machine électrique (18a) est associée à la première roue menante (12a) et la seconde machine électrique (18b) est associée à la seconde roue menante (12b),
dans lequel à l'étape b1) une première charge mécanique au moins d'un arbre d'articulation (20a) associé à la première machine électrique (18a) et la première roue menante (12a) est déterminée,
dans lequel à l'étape b1) une seconde charge mécanique au moins d'un arbre d'articulation (20b) associé à la seconde machine électrique (18b) et la seconde roue menante (12b) est en outre déterminée,
dans lequel à l'étape b2) la première machine électrique (18a) associée à la première roue menante (12a) est commandée de manière à agir contre la première charge mécanique, et
et dans lequel à l'étape b2) la seconde machine électrique (18b) associée à la seconde roue menante (12b) est en outre commandée de manière à agir contre la seconde charge mécanique.

3. Procédé selon l'une quelconque des revendications 1 ou 2,
**caractérisé en ce que**
à l'étape b1) la charge mécanique au moins d'un arbre d'articulation (20a, 20b) reliant une machine électrique (18a, 18b) et une roue menante (12a, 12b) associée est détectée ou calculée.

4. Procédé selon l'une quelconque des revendications précédentes,
**caractérisé en ce que**
au moins une part de la charge mécanique concerne une oscillation de l'arbre d'articulation (20a, 20b).

5. Procédé selon l'une quelconque des revendications précédentes,
**caractérisé en ce que**
au moins une part de la charge mécanique concerne le moment d'inertie de la machine électrique respective (18, 18b).

6. Procédé selon l'une quelconque des revendications précédentes,
**caractérisé en ce que**
au moins une part de la charge mécanique concerne le couple du frein à friction (14a, 14b) commandé par le système de freinage antiblocage (16).

7. Procédé selon l'une quelconque des revendications précédentes,
**caractérisé en ce que**
au moins une part de la charge mécanique concerne la force de contact entre au moins une roue et la chaussée.

8. Procédé selon l'une quelconque des revendications précédentes,
**caractérisé en ce que**
la machine électrique (18a, 18b) associée à l'au moins une roue menante (12a, 12b) est commandée dans le même sens que le frein à friction (14a, 14b) associé à la même roue menante (12a, 12b), dans lequel dans le même sens étant relatif au sens du couple.

9. Véhicule automobile (10) avec au moins deux roues, dont au moins une est une roue menante (12a, 12b), comprenant :
- un premier frein à friction (14a) qui est associé à la première roue, et un second frein à friction (14b) qui est associé à la seconde roue ;
- un système de freinage antiblocage (16) qui est réalisé de telle manière qu'il agisse par roue individuelle sur les freins à friction (14a, 14b) des roues du véhicule automobile (10) ;
**caractérisé en ce que**
le véhicule automobile (10) comporte en outre :
- au moins une machine électrique (18a, 18b) qui est couplée pour l'entraînement précisément d'une roue menante (12a, 12b) du véhicule automobile (10) à cette roue menante (12a, 12b) ;
- au moins un dispositif de détermination (24) pour la détermination de la charge mécanique au moins d'un arbre d'articulation (20) reliant une machine électrique (18) et une roue menante (12) associée pendant un actionnement du système de freinage antiblocage (16) ; et
- un dispositif de régulation (28) qui est couplé au dispositif de détermination (24), dans lequel le dispositif de régulation (28) est conçu afin de commander la machine électrique (18) associée à la roue menante (12) de manière à agir contre la charge mécanique, dans lequel le dispositif de régulation (28) est de plus conçu afin de commander la machine électrique (18a, 18b) associée à l'au moins une roue menante (12a, 12b) de telle manière qu'un moment de torsion déterminé d'un arbre d'articulation (20a, 20b) reliant la machine électrique (18a, 18b) et la roue menante (12a, 12b) associée soit réduit et/ou un mouvement d'oscillation de torsion déterminé de l'arbre d'articulation (20a, 20b) reliant la machine électrique (18a, 18b) et la roue menante (12a, 12b) associée soit réduit.
